# EUROPEAN PATENT SPECIFICATION

(11) **EP 0 766 923 B1**
(45) Date of publication and mention of the grant of the patent: **28.08.2002**
(21) Application number: 96306116.3
(22) Date of filing: 21.08.1996
(51) Int. Cl.: A23K 1/18

(54) **Wild bird food**
Futtermittel für freilebende Vögel
Aliment pour oiseaux en liberté

(30) Priority: 07.10.1995 GB 9520499
(43) Date of publication of application: 09.04.1997
(73) Proprietor: C J WILDBIRD FOODS LTD., Shrewsbury Shropshire SY4 4UB (GB)
(72) Inventor: Whittles, Franklyn Brian, Shrewsbury, Shropshire SY4 4UB (GB)
(74) Representative: Barnfather, Karl Jon, Dr.

(56) References cited:
- DE-A- 2 235 099
- DE-A- 3 227 754
- DE-A- 3 502 700
- DE-A- 3 531 201
- Belitz, H.-D.; Grosch, W.: Lehrbuch der Lebensmittelchemie, Berlin Heidelberg 1992, p.590

## Description

This invention relates to wild bird food. It is known to provide fat as food for wild garden birds, in the simplest form a lump of ordinary butcher's suet tied with string and suspended from the branch of a tree. This is particularly appreciated by blue tits and other small birds which the householder may wish to attract into his garden.

It is also known to manufacture food consisting of or comprising fat in the form of balls or sticks extruded about a string or wire from which the fat can be suspended from the tree. In this case the fat has been tallow. It is believed that those products previously marketed have been discontinued because they had been found unsatisfactory in some way. It is believed that the fat softened in warm weather and perhaps went rancid with accompanying odour or the softening resulted in the mass of fat becoming separated from the string or wire and falling to the ground.

DE 2235099A discloses a wild bird food composition comprising comminuted peanuts and sunflower seeds. DE 3531201A discloses the addition of lime to crushed or pressed wheat, oats, barley, sunflower seed and beef suet, in order to loosen the bird feed. DE 3227754A discloses the use of limestone grit and/or shell grit, fat that can be hardened and comminuted nuts (claim 6) in bird feed. DE 3502700A discloses the use of broken peanuts in blocks of various shapes.

The object of the present invention is to provide improvements.

According to the invention wild bird food comprises a mixture of fat and peanut flour in cast form.

The fat is preferably white tallow.

Additional 'dry' ingredients may be mixed in, for example dried insects and/or seeds, particularly sunflower seeds.

Preferably the fat content in the mixture is between 5 and 50% by weight of the finished product.

More preferably the fat is present between 5 and 30% by weight: even more preferably between 5 and 15% by weight.

The effect of the peanut flour is to 'dry' the product, but it also contains food and fat or oil useful to the birds.

The mixture may be made by first melting the fat, and then adding the other ingredients, and in any event the product is cast, not extruded.
The product may be cast into bars, blocks, or balls for example for use in mesh containers, or cast about a suspension device, sticks.

Preferably the mixture is cast in the form of an annular block, that is to say one which has an axial bore opening through the block from end to end. The block is threaded by a stem integral with a foot which may be a disc of generally similar dimensions to the exterior of the block. The end of the stem opposite to the foot projects through the block because the stem is longer than the cast block, and is provided with a suspension eye or hook so that the stem may be tied to a twig to hang there-below so that the cast block is accessible to birds. The stem and foot may be injection moulded of suitable polythene or like material.

## Claims

1. Wild bird food comprising a mixture of fat and peanut flour, in cast form.

2. Wild bird food as claimed in Claim 1 wherein the fat is white tallow.

3. Wild bird food as claimed in any preceding Claim where additional dry ingredients are mixed in including dried insects and/or seeds.

4. Wild bird food as claimed in any preceding Claim having a fat content of between 5 and 50% by weight of the finished product.

5. Wild bird food as claimed in any of Claims 1 to 3 wherein the fat is present between 5 and 30% by weight.

6. Wild bird food as claimed in any of Claims 1 to 3 wherein the fat is present between 5 and 15% by weight.

7. Wild bird food comprising a mixture of white tallow and peanut flour with or without additional dried ingredients made by melting the fat and casting the mixture into a block.

8. Wild bird food as claimed in Claim 7 wherein the block is in the form of an annulus.

9. Wild bird food as claimed in Claim 8 wherein the cast annulus is threaded by a stem integral with a foot, and the stem has means for suspending the cast block of food for example from a branch.

## Patentansprüche

1. Futtermittel für freilebende Vögel, die eine M i-schung aus Fett und Erdnussmehl in gegossener Form aufweist.

2. Futtermittel nach Anspruch 1, bei dem das Fett weißer Talg ist.

3. Futtermittel nach einem der vorgehenden Ansprüche, bei dem zusätzlich Trockenbestandteile beigemischt werden, einschließlich getrockneter Insekten und/oder Saatkörner.

4. Futtermittel nach einem der vorgehenden Ansprüche mit einem Fettanteil von 5 bis 50 Gewichtsprozent bezüglich des fertigen Produkts.

5. Futtermittel nach einem der Ansprüche 1 bis 3 mit 5 bis 30 Gewichtsprozent Fett bezüglich des fertigen Produkts.

6. Futtermittel nach einem der Ansprüche 1 bis 3 mit 5 bis 15 Gewichtsprozent Fett bezüglich des fertigen Produkts.

7. Futtermittel für frei lebende Vögel, das eine M i-schung aus weißem Talg und Erdnussmehl ggf. mit zusätzlichen Trockenbestandteilen aufweist und durch Schmelzen des Fetts und Gießen der Mischung zu einem Block hergestellt wird.

8. Futtermittel nach Anspruch 7, bei dem der Block die Gestalt eines Ringes hat.

9. Futtermittel nach Anspruch 8, bei dem in den g e-gossenen Ring ein mit einem Fuß einteiliger Schaft eingeschraubt ist und der Schaft Mittel zum Aufhängen des gegossenen Futtermittelblocks - be i-spielsweis an einen Zweig - aufweist.

## Revendications

1. Aliment pour oiseaux en liberté comprenant un mélange de graisse et de farine de cacahuète sous forme moulée.

2. Aliment pour oiseaux en liberté selon la revendication 1, **caractérisé en ce que** la graisse est du suif blanc.

3. Aliment pour oiseaux en liberté selon l'une quelconque des revendications précédentes, **caractérisé en ce que** des ingrédients séchés additionnels sont mélangés dans lesquels figurent des insectes et/ou des graines séché(e)s.

4. Aliment pour oiseaux en liberté selon l'une quelconque des revendications précédentes, **caractérisé en ce qu'**il comprend une teneur en graisse comprise entre 5 et 50% en poids de produit fini.

5. Aliment pour oiseaux en liberté selon l'une quelconque des revendications 1 à 3, **caractérisé en ce que** la proportion en graisse est comprise entre 5 et 30% en poids.

6. Aliment pour oiseaux en liberté selon l'une quelconque des revendications 1 à 3, **caractérisé en ce que** la proportion en graisse est comprise entre 5 et 15% en poids.

7. Aliment pour oiseaux en liberté comprenant un mélange de suif blanc et de farine de cacahuète avec ou sans ingrédients séchés, fabriqué en faisant fondre la graisse et en moulant le mélange en bloc.

8. Aliment pour oiseaux en liberté selon la revendication 7, **caractérisé en ce que** le bloc est conformé en anneau.

9. Aliment pour oiseaux en liberté selon la revendication 8, **caractérisé en ce que** l'anneau moulé est fileté par une tige d'une seule pièce avec un pied, et **en ce que** la tige présente des moyens pour suspendre le bloc de nourriture moulé par exemple à une branche.
